Europäisches Patentamt

European Patent Office

Office européen des brevets

(11) Veröffentlichungsnummer: **0 233 540 B1**

## EUROPÄISCHE PATENTSCHRIFT

(45) Veröffentlichungstag der Patentschrift: 03.04.91

(51) Int. Cl.5: **H02K 29/10**

(21) Anmeldenummer: 87101442.9

(22) Anmeldetag: 03.02.87

(54) Anordnung und Schaltung für die elektrische Kommutierung von Erregerspulen.

(30) Priorität: 11.02.86 DE 3604238

(43) Veröffentlichungstag der Anmeldung:
26.08.87 Patentblatt 87/35

(45) Bekanntmachung des Hinweises auf die
Patenterteilung:
03.04.91 Patentblatt 91/14

(84) Benannte Vertragsstaaten:
AT BE CH DE ES FR GB GR IT LI LU NL SE

(56) Entgegenhaltungen:
EP-A- 0 150 070
FR-A- 2 415 899
FR-A- 2 441 289
GB-A- 1 498 409
GB-A- 2 028 599

(73) Patentinhaber: **Deutsche Thomson-Brandt GmbH**
**Postfach 2060**
**W-7730 Villingen-Schwenningen(DE)**

(72) Erfinder: **Uhde, Dietmar, Dipl.-Ing.**
**Weiherstrasse 11**
**W-7744 Königsfeld(DE)**
Erfinder: **Gleim, Günter**
**Oberer Sonnenbühl 22**
**W-7730 VS-Villingen 22(DE)**
Erfinder: **Schandl, Hartmut, Dipl.-Ing.**
**Egerstrasse 2**
**W-7730 Villingen(DE)**
Erfinder: **Hoch, Peter, Ing. grad.**
**Bergstrasse 56**
**W-7740 Triberg(DE)**
Erfinder: **Lehmann, Rüdiger**
**Haldenweg 42**
**W-7742 St. Georgen(DE)**

(74) Vertreter: **Einsel, Robert, Dipl.-Ing.**
**Deutsche Thomson-Brandt GmbH Patent-
und Lizenzabteilung Göttinger Chaussee 76
W-3000 Hannover 91(DE)**

## Beschreibung

Bei bekannten elektronisch kommutierten, mehrpoligen Gleichmotoren für den Antrieb von Plattenspielern, Tonbandgeräten und Videorecordern erfolgt die Kommutierung der Spulen in Abhängigkeit von Signalen, die z.B. von Hallelementen abgegeben werden. Die Hallelemente sind ortsfest in einer bestimmten Zuordnung zu den Spulen angeordnet. Sie detektieren die Stellung des mit Permanentmagneten versehenen Rotors in dem sie Polung und Größe der von den Permanentmagneten abgegebenen Feldlinien erkennen. Je nach Aufbau eines Motors sind mehrere Hallelemente erforderlich. So werden z.B. für einen dreiphasigen Motor drei Hallelemente benötigt. Mit Hallelementen kann zwar die Polung detektiert werden, sie sind aber für eine Phasenregelung, wie sie z.B. in Videorecordern erforderlich ist, zu ungenau.

Für die Drehzahlregelung sind außerdem mit der Motorwelle verbundene Tacho- oder Frequenzgeneratoren erforderlich, deren Signale für die Steuerung in einem Servosystem ausgewertet werden. Motore, die für den Antrieb eines Kopfrades in einem Videorecorder vorgesehen sind, benötigen zusätzlich für die Phasensteuerung, d.h. für die Zuordnung von Magnetkopfumschaltzeitpunkt zu den Synchronimpulsen des Videosignales einen sogenannten pic-up-Puls. Dieser pic-up-Puls muß bei einer fest vorgegebenen Stellung des Kopfrades und damit auch des Motors generiert werden.

Es sind auch Schaltungen zu Erkennung des Kommutierungszeitpunktes und der Phasenlage bekannt, bei denen induktive Magnetfeldsensoren verwendet werden. Sowohl Hallelemente als auch Magnetfeldsensoren sind relativ teuer und die Detektionsmöglichkeit bei niedrigeren Motordrehzahlen ist gering. Außerdem ist die Signalamplitude, die von diesen Sensoren abgegeben wird, relativ klein, so daß anschließend eine große Verstärkung für die Auswertung erfolgen muß.

Ferner ist es bekannt, Lichtschranken in Verbindung mit optisch abtastbaren Codierungen als Sensoren für die Erkennung der Phasenlage und Geschwindigkeit eines Rotors einzusetzen. So ist es aus dem Dokument FR-A-2415899 bekannt, am Umfang des Rotors angebrachte Codierungen, die durch unterschiedliche Durchmesser gebildet werden, mittels mehrerer Lichtschranken abzutasten. Auch aus der GB-A-2028599 ist eine Anordnung zur Erkennung der Winkelposition für einen Discmotor bekannt, bei der mit der Rotorachse eine Scheibe verbunden ist, die unter einem Winkel von 90° zwei zueinander unterschiedliche Codierungen trägt, die von zwei Lichtschranken abgetastet werden.

Es ist Aufgabe der Erfindung eine Anordnung und Schaltung für die Kommutierung eines Gleichstrommotors anzugeben, durch welche eine Drehzahl und Phasenregelung ohne Hallgenerator und ohne induktive Magnetsensoren sowie ohne Tacho- bzw. Frequenzgenerator und ohne pic-up-Pulsgeber ermöglicht wird.

Diese Aufgabe wird durch die im Anspruch 1 beschriebene Erfindung gelöst. Vorteilhafte Weiterbildungen der Erfindung sind in den Unteransprüchen beschrieben.

Im Prinzip wird die Erfindung durch optisch abtastbare Codierungen gelöst, die auf dem Umfang des rotierenden Teiles des Motors angebracht sind, aus denen Steuersignale für den jeweiligen Kommutierungszeitpunkt abgeleitet werden. Vorzugsweise sind die Codierungen auf einem lichtdurchlässigen Kunststoffring in Form von lichtundurchlässigen Balken mit unterschiedlichen Breiten aufgebracht, wobei der Kunststoffring in einer festen Zuordnung über den Rotor des Motors geschoben ist. Auch ist es möglich den Rotor selbst als lichtdurchlässiges Kunststoffteil auszuführen in welchem die Permanentmagnete ringförmig angeordnet sind. Dabei sind die optisch abtastbaren Codierungen am Umfang des Kunststoffteiles angebracht. Eine Kante des Kunststoffringes mit der Codierung taucht dabei in die Gabel eines Optokopplers ein.

Für die Auswertung der Codierung ist es erforderlich drei verschiedene Lagezustände des Rotors zu erkennen. Dies wird durch unterschiedliche Breiten der Markierungen für die Codierung erreicht, indem jedem erforderlichen Kommutierungszeitpunkt eine Markierung in Form eines lichtundurchlässigen Balkens zugeordnet wird. Um eine Anfangs- oder Nullage zu definieren, ist eine Markierung wesentlich breiter als die übrigen ausgelegt. So sind z.B. bei einem dreisträngigem Motor, der eine in Stern geschaltete Wicklung und 4 Polpaare = 8 Pole über den Umfang von 360° 8 X 3 = 24 Markierungen mit gleichem Abstand ihrer Vorderflanken für die Detektierung erforderlich. Dabei sind 23 von den 24 Markierungen in ihrer Breite so ausgelegt, das bei stehendem Motor und Stellung einer dieser 23 Markierungen im Optokoppler-Strahlengang dieser Strahlengang nicht wie bei der 24. Markierung völlig unterbrochen wird. Der Lichtstrom wird dadurch auf einen Bruchteil reduziert, wodurch das Ausgangssignal einen definierten Pegel zwischen Hell- und Dunkelwert erreicht.

Die Zuordnung der durch die Optoschranke aufgenommenen Impulse für die exakte Steuerung des Kommutierungszeitpunkts kann durch einen Mikroprozessor ausgewertet werden. Sind Phasenanpassungen wie z.B. für den Einsatz in Kopftrommelantrieben erforderlich, kann dies durch im Mikroprozessor gespeicherte Verzögerungszeiten, wie beispielhaft in der Anmeldung EP-A-0212390 beschrieben, erfolgen.

Die Erfindung wird an Hand der Zeichnung beispielhaft näher erläutert.

Darin zeigen:

Fig. 1    einen elektronisch kommutierbaren Gleichstrommotor in Verbindung mit einer Kopftrommel für Videorecorder,

Fig. 2    einen Rotor mit außen aufgebrachten Markierungen und

Fig. 3    ein Ablaufdiagramm für die Kommutierung und die Erzeugung von Kopfumschaltimpulsen.

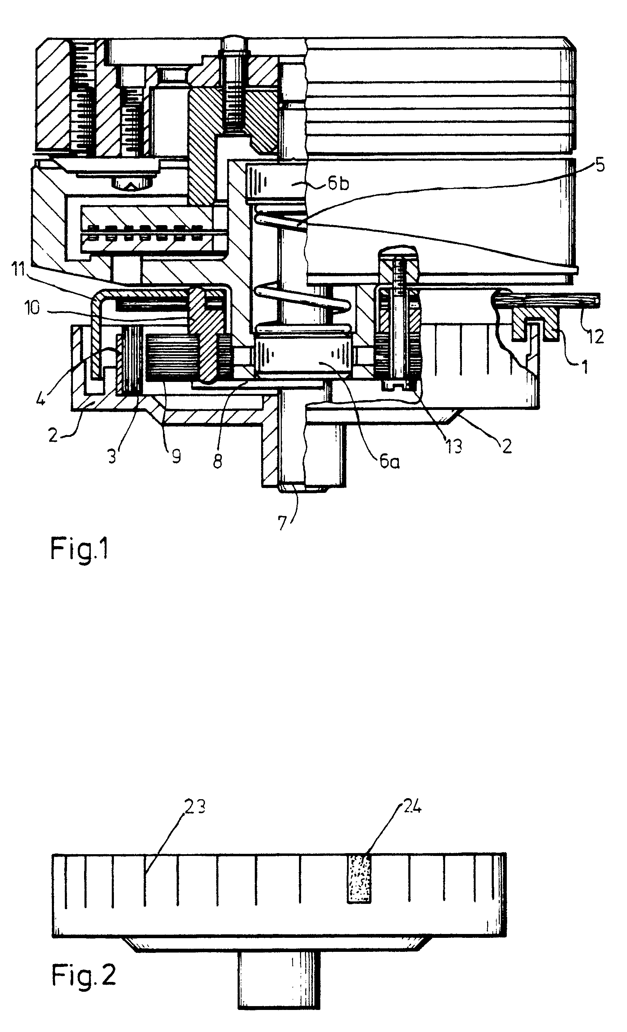

Fig. 1 zeigt einen elektronisch kommutierbaren Gleichstrommotor in Verbindung mit einer Kopftrommel für einen Videorecorder. Der Stator des Motors ist mit dem unteren, feststehenden Teil der Kopftrommel durch die Schraube 13 verbunden. Der Stator wird gebildet durch den Statoranker 9 auf dem die nichtgezeichneten kommutierbaren Statorspulen angeordnet sind. Der Statoranker 9 ist über ein elektrisch isolierendes Distanzstück 10 und einer Leiterplatte 12 mit dem abschirmenden Motorgehäuse 11 durch Schraube 13 verbunden. Die Leiterplatte 12 ragt durch eine Öffnung des Motorgehäuses 11 aus dem Stator heraus. Auf der Leiterplatte 12 ist innerhalb dieser Öffnung eine Gabellichtschranke 1 befestigt. Außerdem trägt die Leiterplatte 12 innerhalb des Motorgehäuses 11 nicht dargestellte Teile der Motorelektronik.

In die Gabel der Gabellichtschranke 1 ragt eine mit Codierungen versehene Kante des Rotorteiles 2, welches mit der Welle 7 des Motors fest verbunden ist. Im Rotorteil 2 sind die ringförmig ausgeführten Permanentmagnete 3 befestigt, die von einem aus Weicheisen bestehenden Rückschlußring 4 umgeben sind.

Gelagert ist der Rotor durch eine sogenannte Integralspindel 5. Diese bietet neben hoher Rundlaufgenauigkeit und leichter Montage den Vorteil, daß die Lagervorspannung über eine Feder zwischen den Außenringen 6a, 6b aufgebracht wird. Es ist dadurch bei einem derartigen Lager nicht erforderlich von außen auf die Innenringe der Kugellager einen Andruck auszuüben. Durch diesen Vorteil kann das Rotorteil 2 direkt auf die Welle 7 gepreßt werden oder in anderer kraft- oder formschlüssigerweise befestigt werden.

Ein weiterer Vorteil einer derartigen Spindel ist, daß zwischen Rotor und Lager 6a die Welle 7 frei liegt und somit eine Möglichkeit geschaffen ist, an dieser Stelle die bei einer Kopftrommel notwendige Erdungsfeder (8) anliegen zu lassen.

Fig. 2 zeigt einen Rotor mit außen aufgebrachen Markierungen. Der Rotor besteht aus einem lichtdurchlässigem Kunststoffmaterial. Auf seiner Außenseite sind Markierungen in der dargestellten Form angebracht. Dabei ist eine markierung 24 breiter ausgeführt als die übrigen Markierungen 23. Die Markierung 24 dient für die Erkennung einer Anfangs- oder Nulllage, die für den weiteren Aufbau eines Steuersignals für die Kommutierung der Spulen erforderlich ist. Außerdem wird aus der Markierung 24 ein oder mehrere Impulse abgeleitet, die für die Umschaltung der Magnetköpfe während einer Umdrehung benötigt werden.

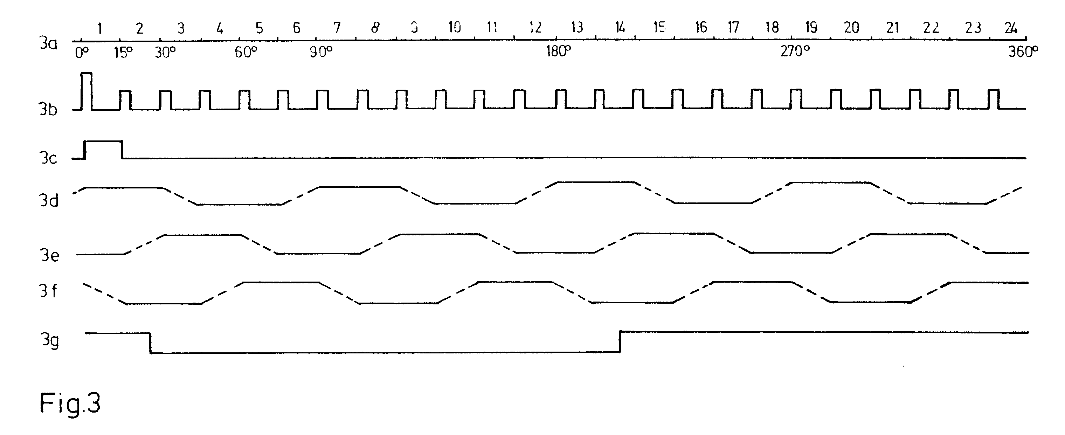

Fig. 3 zeigt ein Ablaufdiagramm für die Kommutierung und die Erzeugung von Kopfumschaltimpulsen.

Fig. 3a zeigt eine Skala in der 24 Taktzeiten über einem Kreisumfang von 360° aufgetragen sind. Diese 24 Taktzeiten werden für die Kommutierung einer dreisträngigen Spulenanordnung mit 4 Magnetpolpaaren benötigt. Generiert werden diese Taktzeiten in einer Lichtschranke beim Abtasten des Codes am Umfang des Rotors.

Der Amplitudenverlauf ist in Fig. 3b aufgezeichnet. Dabei wird der erste Impuls großer Amplitude durch die breite Markierung 24 vom Rotorteil 2 erzeugt. Die Vorderflanken der Impulse weisen gleichen Abstand voneinander auf.

Fig. 3c zeigt das Signal, welches ein Mikroprozessor abgibt, um einen, mit dem aufzuzeichnenden Videosignal phasensynchronen Motorlauf zu realisieren. Dieser Impuls ist einem Impuls gleichzusetzen, wie er z.B. von einem pic up-Pulsegeber in bekannten Videorecordern erzeugt wird.

Die Darstellungen in Fig. 3d, 3e und 3f zeigen die aus Fig. 3b abgeleiteten Einschaltzeiten mit zugehöriger Polung für die einzelnen Spulen der dreisträngigen Anordnung. Dabei sind die Übergänge von einer Polung zur anderen Polung gestrichelt gezeichnet.

Fig. 3g zeigt die für einen Videorecorder erforderlichen Kopfumschaltsignalimpulse die mit Hilfe des Mikroprozessors generiertwerden können. Ihre Zuordnung zum ersten Impuls von Fig. 3b wird durch im Mikroprozessor gespeicherte Verzögerungszeiten gesteuert, die sich bei Abgleich des Recorders z.B. mit Hilfe einer Normbandes ergeben.

**Ansprüche**

1.    Anordnung und Schaltung für die elektronische Kommutierung von Erregerspulen (9) eines mehrpoligen, Permanentmagnete (3) aufweisenden Gleichstrommotors, mit einem axialen oder radialen Luftspalt zwischen Erregerspulen (9) und Permanentmagneten (3), bei dem die Permanentmagnete (3) den Erregerspulen (9) gegenüberstehend auf einer Kreisbahn angeordnet sind, und am Umfang des rotierenden Teiles eine optisch abtastbare Codierung (23,24) in fester Zuordnung zu den Magneten (3) angebracht ist, und die Codierung (23,24) durch die Rotation mittels eines Abtasters (1) in Signale umgesetzt wird, aus denen Phasenlage und Kommutierungszeitpunkt in einer Schaltung ausgewertet und als Kommutierungsspannung den Erregerspulen (9) zugeführt werden, **dadurch gekennzeichnet, daß** der rotierende Teil des Motors aus einem mit der Motorachse (7) verbundenem rotationssymmetrischen, lichtdurchlässigen, einteiligen Kunststoffteil (2) besteht, in welchem die Permanentmagnete (3) in ringförmiger Anordnung befestigt sind, und daß die optisch abtastbare Codierung (23,24) durch einen Kunststoffring des Kunststoffteiles (2) gebildet wird, der mit seiner, die Codierung (23,24) tragenden Kante zwischen Geber und Empfänger einer einzigen Lichtschranke (1) eintaucht.

2. Anordnung und Schaltung nach Anspruch 1, **dadurch gekennzeichnet, daß** jedem Kommutierungsschritt während einer Umdrehung eine über dem Umfang verteilte lichtundurchlässige Zone zugeordnet ist.

3. Anordnung und Schaltung nach einem der Ansprüche 1 - 2, **dadurch gekennzeichnet, daß** die Codierung (23,24) so ausgebildet ist, daß durch den Abtaster drei Pegelstufen erkannt werden, indem bei n Kommutierungsschritten n-1 gleichartige Codierungen (23) und eine weitere in der Form davon abweichende Codierung (24) am Umfang angebracht sind.

4. Anordnung und Schaltung nach einem der Ansprüche 1 - 3, **dadurch gekennzeichnet, daß** zwischen Rotorgehäuse und dem Permanentmagneten ein rinförmiger, axialer Luftspalt vorgesehen ist, in welchem Sende-oder Empfangsteil der Lichtschranke (1) angeordnet ist.

5. Anordnung und Schaltung nach Anspruch 4, dadurch gekennzeichnet, daß der Lichtstrom der Lichtschranke (1) regelbar ist, so daß Alterungserscheinungen im Lichtstrom ausgeglichen werden.

6. Gleichstrommotor mit einer Anordnung und Schaltung für die elektronische Kommutierung von Erregerspulen nach einem der Ansprüche 1 - 5, **dadurch gekennzeichnet, daß** der Motor für den Kopfradantrieb in einem Videorecorder verwendet wird.

## Claims

1. An arrangement and a circuit for the electronic commutation of exciter coils (9) of a multi-pole d.c. motor which has permanent magnets (3), having an axial or radial air gap between the exciter coils (9) and permanent magnets (3), in which the permanent magnets (3) are arranged opposite the exciter coils (9) on a circular path, and an optically scannable coding (23,24) is arranged at the periphery of the rotating part in a fixed correlation to the magnets (3), and the coding (23,24) is converted into signals by rotation with the aid of a scanner (1), from which signals the phase position and commutation time are evaluated in a circuit and supplied to the exciter coils (9) as the commutating voltage, **characterized in that** the rotating part of the motor consists of a one-piece plastics member (2) which is light-transmissive and rotationally symmetrical and connected to the motor axle (7), in which member (2) the permanent magnets (3) are fixed in an annular arrangement, and that the optically scannable coding (23, 24) is formed by a plastics ring of the plastics member (2), which with its edge which carries the coding (23,24), extends between the sensor and the receiver of a single light barrier (1).

2. An arrangement and a circuit according to claim 1, **characterised in that** a zone which does not allow the passage of light and which is distributed over the periphery is associated with each commutating step during one rotation.

3. An arrangement and a circuit according to any one of claims 1 - 2, **characterized in that** the coding (23,24) is so formed that three level gradations are recognised by the scanner, in that, with n commutating steps n-1 similar codings (23) and one other coding (24) which differs therefrom in shape are arranged at the periphery.

4. An arrangement and a circuit according to any one of claims 1 - 3, **characterized in that** an annular, axial air gap is provided between the rotor casing and the permanent magnet, in which the transmission or receiving part of the light barrier (1) is arranged.

5. An arrangement and a circuit according to claim 4, **characterized in that** the light current of the light barrier (1) may be regulated so that ageing effects in the light current are compensated.

6. A d.c. motor with an arrangement and a circuit for electronically commutating exciter coils according to any one of claims 1 - 5, **character-**

ized in that the motor is used for the drive of the head wheel in a video recorder.

## Revendications

1. Dispositif et circuit pour la commutation électronique de bobines excitatrices (9) d'un moteur multipolaire à courant continu qui présente des aimants permanents (3), avec une discontinuité magnétique axiale ou radiale entre les bobines excitatrices (9) et les aimants permanents (3), dans lequel les aimants permanents (3) sont placés en face des bobines excitatrices sur une trajectoire circulaire et un codage pouvant être exploré de manière optique (23, 24) est fixé à la périphérie de la pièce rotative en ayant une affectation fixe par rapport aux aimants (3), le codage (23, 24) étant transformé en signaux par la rotation au moyen d'un détecteur (1), à partir desquels la relation de phase et le moment de commutation sont exploités dans un circuit et sont amenés aux bobines excitatrices (9) comme tension de commutation, **caractérisés en ce** que la partie rotative du moteur est constituée par une pièce en matière plastique (2) en une partie, perméable à la lumière, reliée à l'axe du moteur (7) et de rotation symétrique dans laquelle les aimants permanents (3) sont fixés en étant disposés en forme d'anneau et que le codage pouvant être exploré de manière optique (23, 24) est formé par un anneau en matière plastique de la pièce en matière plastique (2) qui est enfoncé, par son arête qui porte le codage (23, 24), entre l'émetteur et le récepteur d'un barrage photoélectrique (1) unique.

2. Dispositif et circuit selon la revendication 1, **caractérisés en ce** qu'une zone opaque, répartie sur la périphérie, est affectée à chaque étape de commutation pendant une rotation.

3. Dispositif et circuit selon l'une des revendications 1 à 2, **caractérisés en ce** que le codage (23, 24) est configuré de telle manière que trois étages de niveau sont détectés par le détecteur (1), cependant que, pour n étapes de commutation, n-1 codages similaires (23) et un autre codage (24) de forme différente de ceux-ci sont fixés à la périphérie.

4. Dispositif et circuit selon l'une des revendications 1 à 3, **caractérisés en ce** qu'un espace intermédiaire axial en forme d'anneau est prévu entre le bâti du rotor et l'aimant permanent dans lequel la partie émettrice ou réceptrice du barrage photoélectrique (19 est placée.

5. Dispositif et circuit selon la revendication 4, **caractérisés en ce** que le flux lumineux du barrage photoélectrique (1) est réglable de manière à compenser les phénomènes de vieillissement du flux lumineux.

6. Moteur à courant continu avec un dispositif et un circuit pour la commutation électronique de bobines excitatrices selon l'une des revendications 1 à 5, **caractérisé en ce** que le moteur est utilisé pour la commande de la roue de tête d'un magnétoscope.

Fig.1

Fig.2

Fig.3

EP 0 233 540 B1